# FASCICULE DE BREVET EUROPEEN

(11) **EP 2 039 569 B1**
(45) Date de publication et mention de la délivrance du brevet: **16.03.2011**
(21) Numéro de dépôt: 08163037.8
(22) Date de dépôt: 27.08.2008
(51) Int. Cl.: B60R 19/24, B62D 65/16

(54) **Support de pare-choc coopérant avec des supports de feu de véhicule automobile**
Stoßstangenhalterung, die mit der Scheinwerferhalterung eines Kraftfahrzeugs gekoppelt ist
Bumper support cooperating with automobile headlight supports

(30) Priorité: 20.09.2007 FR 0757706
(43) Date de publication de la demande: 25.03.2009
(73) Titulaire: PEUGEOT CITROËN AUTOMOBILES S.A., 78140 Vélizy Villacoublay (FR)
(72) Inventeur: Billamboz, Laurent, 25310 Herimoncourt (FR); Keller, Grégory, 68700 Steinbach (FR)
(74) Mandataire: Allain, Laurent

(56) Documents cités:
- WO-A-2006/120359
- DE-A1-102004 057 678
- DE-A1-102005 006 875
- DE-A1-102005 045 086
- DE-B3- 10 237 454
- FR-A- 2 852 285

## Description

La présente invention concerne un support de pare-choc de véhicule automobile du type destiné à être fixé à la caisse dudit véhicule automobile et à être partiellement recouvert par une peau de pare-choc, ladite caisse étant munie de deux supports de feu disposés chacun à une partie extrême transversale de ladite caisse, ledit support de pare-choc comprenant un corps destiné à s'étendre selon une direction transversale entre les supports de feu, ledit corps présentant une surface de support de la peau de pare-choc.

L'invention concerne également une structure de caisse de véhicule automobile comprenant un tel support de pare-choc.

Sur une caisse de véhicule automobile, le support de pare-choc et la peau de pare-choc doivent être placés de façon précise par rapport à la caisse afin de les centrer correctement pour respecter les exigences de jeux et d'affleurements avec un ouvrant se fermant sur la caisse, tel qu'un volet de compartiment à bagages. De même, il est important de respecter les exigences d'alignement entre les feux du véhicule automobile et la peau de pare-choc.

Pour les caisses de véhicules connues, le support de pare-choc et la peau de pare-choc sont montés indépendamment l'un de l'autre et centré chacun par rapport à la caisse du véhicule automobile.

Ce montage n'est pas satisfaisant car il complique le centrage de la peau de pare-choc par rapport au support de pare-choc, notamment lorsque le support comprend une zone apparente non recouverte par la peau de pare-choc afin de conférer une esthétique particulière au véhicule automobile. En effet, dans ce cas là, la peau de pare-choc et le support de pare-choc doivent non seulement être positionné par rapport à la caisse, mais également respecter des exigences de jeu et d'affleurements l'un par rapport à l'autre, notamment au voisinage des parties extrêmes de la zone apparente du support et éventuellement au voisinage d'une zone de bénitier pour un pare-choc arrière. Il est très difficile d'obtenir le respect de ces exigences avec le procédé de montage et de positionnement de l'état de la technique du fait du montage indépendant du support et de la peau sur la caisse.

Ce montage nécessite un nombre important d'ajustements, ce qui est coûteux en temps de montage et en main-d'oeuvre.

DE 10 2005 006 875 décrit un support de pare-choc selon le preamble de la revendication 1.

L'un des objectifs de l'invention est de pallier ces inconvénients en proposant un support de pare-choc et une caisse de véhicule automobile dont le montage est simplifié et permettant d'obtenir facilement le respect de toutes les exigences de jeu et d'affleurements.

A cet effet, l'invention concerne un support de pare-choc selon la revendication 1.

Selon d'autres caractéristiques du support de pare-choc :
- chaque patte est une lame ressort agencée pour effectuer un appui sur le corps dirigé vers l'autre patte lorsque les pattes coopèrent avec les moyens de réception des supports de feu ;
- chaque patte est reliée au corps par un pont de matière présentant des aptitudes à la déformation élastique, et chaque patte présente une extrémité en forme de crochet, destinée à coopérer avec le support de feu ;
- les pattes et le support constituent une même pièce issue de moulage ; et
- le corps comprend des éléments d'absorption destinés à amortir un choc frontal.

L'invention concerne également une structure de caisse de véhicule automobile du type comprenant une partie arrière comportant deux supports de feu fixés chacun à une partie extrême transversale de ladite partie arrière de la structure de caisse, un support de pare-choc disposé entre les supports de feu, une peau de pare-choc fixée à la caisse et recouvrant partiellement le support de pare-choc et les supports de feux, dans laquelle le support de pare-choc est un support tel que décrit dessus.

Selon d'autres caractéristiques de la structure de caisse de véhicule automobile :
- les supports de feu comprennent chacun une surface d'appui, sur laquelle une des pattes prend appui, de manière à centrer, selon une direction transversale, le support de pare-choc par rapport à la structure de caisse ;
- le support de pare-choc comprend une surface affleurante, parallèle à la surface de support et décalée vers le haut par rapport à celle-ci, ladite surface affleurante saillant de la peau de pare-choc de sorte à être visible depuis l'extérieur de la structure de caisse ; et
- la peau de pare-choc et la surface affleurante du support de pare-choc comprennent une zone de bénitier, la peau de pare-choc présentant un creux et la surface affleurante présentant une largeur réduite dans ladite zone de bénitier.

D'autres aspects et avantages de l'invention apparaîtront à la lecture de la description qui suit, donnée à titre d'exemple et faite en références aux dessins annexés, dans lesquels :
- la Fig. 1 est une représentation schématique en perspective éclatée d'une partie de caisse de véhicule automobile selon l'invention,
- la Fig. 2 est une représentation schématique de dessus d'un support de pare-choc selon l'invention,
- la Fig. 3 est une représentation schématique en perspective d'une peau de pare-choc montée sur le support de pare-choc de la Fig. 2.

Dans la description, le terme « longitudinal » est défini selon la direction de déplacement d'un véhicule automobile, le terme « transversal » est défini selon une direction perpendiculaire à la direction « longitudinale » et sensiblement horizontale lorsque le véhicule est monté.

Le support de pare-choc décrit ici est un support de pare-choc arrière. II est cependant entendu que l'invention est également applicable à un pare-choc avant de véhicule automobile.

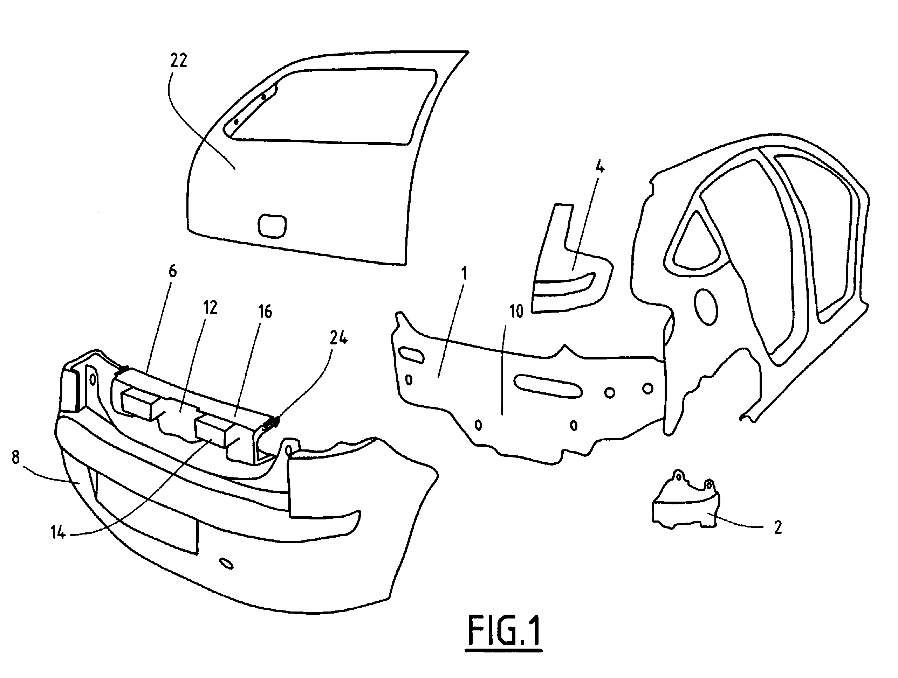

En référence à la Fig. 1, on a représenté une partie arrière de caisse 1 de véhicule automobile, comprenant deux supports de feu 2, deux feux arrière 4, un support de pare-choc 6 et une peau de pare-choc 8. Ces éléments sont fixés à la partie arrière de caisse 1 qui forme une surface de montage transversale 10 sensiblement plane.

Les supports de feu 2, les feux arrière 4 et la peau de pare-choc 8 sont des éléments classiques de véhicule automobile et ne seront pas décrits en détail ici.

Sur la Fig. 1, seuls un support de feu 2 et un feu arrière 4 ont été représentés à des fins de clarté. Chaque support de feu 2 est fixé à une partie extrême transversale de la surface de montage 10 et chaque feu 4 est disposé sur un support de feu 2 et fixé à la caisse 1 et/ou au support de feu 2.

Le support de pare-choc 6 comprend un corps 12 s'étendant selon la direction transversale entre les deux supports de feu 2.

Le corps 12 est pourvu d'au moins un élément d'absorption 14 de l'énergie due à un choc s'étendant selon la direction longitudinale. Cet élément d'absorption 14 est par exemple un élément déformable plastiquement formé d'une seule pièce avec le corps 12 ou rapporté sur celui-ci de façon connue en soi.

Le corps 12 comprend une surface supérieure 16 de support de la peau de pare-choc 8. La surface de support 16 s'étend sensiblement dans un plan horizontal et reçoit une surface d'appui de la peau de pare-choc 8 afin de soutenir celui-ci. Ainsi, lorsque la peau de pare-choc 8 est montée, la surface d'appui repose sur la surface de support 16 et la peau 8 recouvre le corps 12 et les supports de feu 2. L'élément d'absorption 14 s'étend alors entre la surface de montage 10 et la peau de pare-choc 8 afin de permettre l'absorption d'au moins une partie de l'énergie due à un choc contre ladite peau de pare-choc 8.

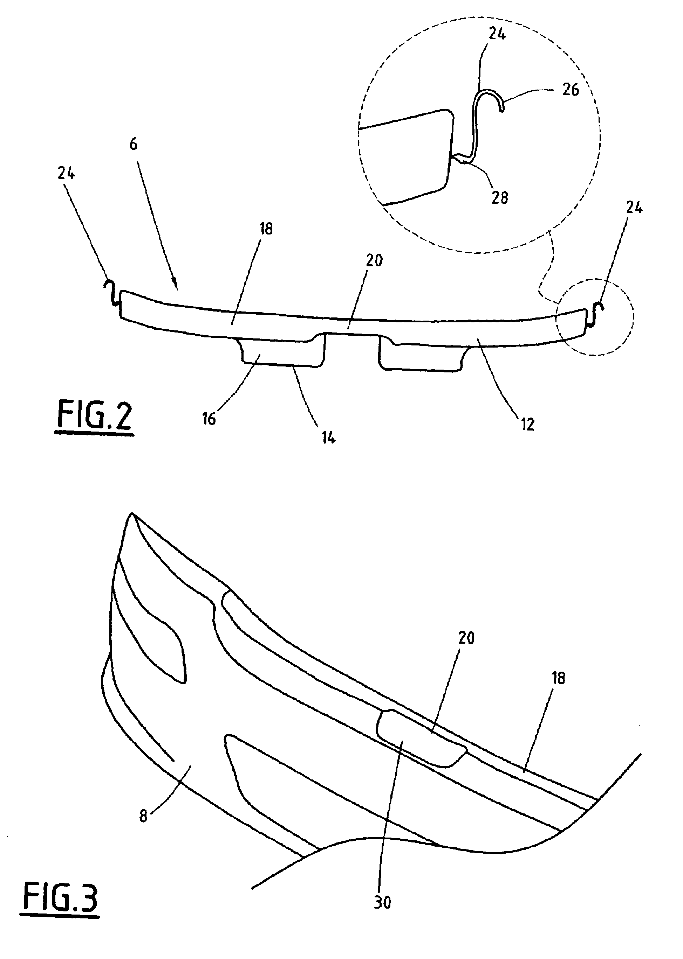

Le corps 12 comprend en outre une surface affleurante 18 sensiblement parallèle à la surface de support 16 et décalée longitudinalement et vers le haut par rapport à la surface de support 16. La surface affleurante 18 saille de la peau de pare-choc 8 et est visible lorsque la peau de pare-choc 8 est montée sur le support de pare-choc 6, comme représenté sur la Fig. 3. La surface de support 16 est, quant à elle, invisible depuis l'extérieur du véhicule lorsque la peau de pare-choc est montée sur le véhicule. La surface affleurante 18 confère une esthétique particulière à la partie arrière du véhicule automobile. La surface affleurante 18 comprend une zone de bénitier 20 disposée sensiblement au centre du corps 12. Dans cette zone 20, la largeur de la surface affleurante 18 est réduite par rapport à sa largeur en dehors de la zone 20, comme représenté Fig. 2. La zone de bénitier 20 permet à un utilisateur d'accéder à un bouton d'ouverture d'un ouvrant prévu dans la partie arrière du véhicule, tel qu'un volet 22 de compartiment à bagage.

Le corps 12 comprend deux pattes 24 respectivement solidaires d'une partie extrême transversale du corps 12. Les pattes 24 s'étendent sensiblement transversalement à partir des parties extrêmes du corps 12 vers les supports de feu 2, comme représenté sur les Fig. 1 et 2. Les pattes 24 prennent appui sur une surface d'appui des supports de feu 2 formant moyen de réception, constituée par un bord tombant desdits supports 2 de sorte à assurer un maintien du corps 12 par rapport aux supports de feu 2 et à la surface de montage 10 avant la fixation définitive du support de pare-choc 10.

Chaque patte 24 comprend une partie extrême transversale 26, sensiblement en forme de crochet, reliée au corps 12 par un pont de matière 28 présentant des caractéristiques de ressort. Ainsi, chaque patte 24 présente des caractéristiques de lame ressort. La partie extrême 26 prend appui contre une paroi sensiblement perpendiculaire à la surface d'appui du support de feu 2 de sorte que la patte 24 effectue un appui sur le corps 12 dirigé vers l'autre patte 24 lorsque les pattes coopèrent avec les supports de feu. De la sorte, lors du montage du véhicule automobile, le support de pare-choc 4 est maintenu et centré par rapport aux supports de feu 2 et à la surface de montage 10 grâce à l'action des pattes 24 en coopération avec les moyens de réception des supports de feu 2. Ceci permet de faciliter la fixation définitive du support de pare-choc 4, car aucun ajustement de la position de ce dernier n'est nécessaire.

La peau de pare-choc 8 est ensuite posée sur le support de pare-choc 4. La peau de pare-choc 8 comprend un creux 30 dans la zone de bénitier 20 pour permettre le passage des doigts d'un utilisateur vers un bouton d'actionnement de l'ouverture de l'ouvrant 22. Lors du montage de la peau 8, on ajuste la position de la peau de pare-choc par rapport à la surface affleurante 18 du support de pare-choc 4, notamment au voisinage de la zone de bénitier 20 et des parties extrêmes transversales de la surface affleurante 18, de sorte à respecter les contraintes de jeux et d'affleurement. Cet ajustement a pour effet de centrer automatiquement la peau de pare-choc par rapport aux supports de feu 2 et à la surface de montage 10, du fait du centrage préalable du support de pare-choc. La peau de pare-choc 8 peut ensuite être fixée définitivement à la surface de montage 10.

L'invention décrite ci-dessus permet donc de pré-positionner de façon simple et rapide le support de pare-choc 4 et la peau de pare-choc 8 par rapport aux supports de feu 2 et à la surface de montage 10 avant leur fixation définitive.

Il n'est pas nécessaire de recourir à des ajustements coûteux en temps et en main-d'oeuvre pour respecter les contraintes de jeux et d'affleurements à la fois de la peau de pare-choc 8 par rapport à la surface affleurante 18 et de la peau de pare-choc par rapport aux supports de feu 2 et à la surface de montage 10.

## Revendications

1. Support de pare-choc (6) de véhicule automobile, destiné à être fixé à la caisse (1) dudit véhicule automobile et à être partiellement recouvert par une peau de pare-choc (8), ladite caisse étant munie de deux supports de feu (2) disposés chacun à une partie extrême transversale de ladite caisse (1), ledit support de pare-choc (6) comprenant un corps (12) destiné à s'étendre selon une direction transversale entre les supports de feu (2) et présentant une surface de support (16) de la peau de pare-choc (8), ledit support de pare-choc (6) comprenant deux pattes (24) destinées à coopérer avec des moyens de réception prévus dans les supports de feu (2), de manière à maintenir et à centrer le support de pare-choc (6) par rapport à la caisse (1) de véhicule automobile, chacune des deux pattes (24) étant solidaire d'une extrémité transversale du corps (12), **caractérisé en ce que** les pattes (24) saillent transversalement des parties extrêmes du corps (12).

2. Support de pare-choc selon la revendication 1, **caractérisé en ce que** chaque patte (24) est une lame ressort agencée pour effectuer un appui sur le corps (12) dirigé vers l'autre patte (24) lorsque les pattes (24) coopèrent avec les moyens de réception des supports de feu (2).

3. Support de pare-choc selon l'une quelconque des revendications 1 ou 2, **caractérisé en ce que** chaque patte (24) est reliée au corps (12) par un pont de matière (28) présentant des aptitudes à la déformation élastique, et **en ce que**, chaque patte (24) présente une extrémité (26) en forme de crochet, destinée à coopérer avec le support de feu (2).

4. Support de pare-choc selon l'une quelconque des revendications précédentes, **caractérisé en ce que** les pattes (24) et le support (6) constituent une même pièce issue de moulage.

5. Support de pare-choc selon l'une quelconque des revendications précédentes, **caractérisé en ce que** le corps (12) comprend des éléments d'absorption (14) destinés à amortir un choc frontal.

6. Structure de caisse de véhicule automobile, comprenant une partie arrière comportant deux supports de feu (2) fixés chacun à une partie extrême transversale de ladite partie arrière de la structure de caisse (1), un support de pare-choc (4) disposé entre les supports de feu (2), une peau de pare-choc (8) fixée à la caisse (1) et recouvrant partiellement le support de pare-choc (6) et les supports de feux (2), **caractérisé en ce que** le support de pare-choc (6) est conforme à l'une quelconque des revendications 1 à 5.

7. Structure de caisse selon la revendication 6, **caractérisé en ce que** les supports de feu (2) comprennent chacun une surface d'appui, sur laquelle une des pattes (24) prend appui, de manière à centrer, selon une direction transversale, le support de pare-choc (6) par rapport à la structure de caisse (1).

8. Structure de caisse selon la revendication 6 ou 7, **caractérisé en ce que** le support de pare-choc (6) comprend une surface affleurante (18), parallèle à la surface de support (16) et décalée vers le haut par rapport à celle-ci, ladite surface affleurante (18) saillant de la peau de pare-choc (8) de sorte à être visible depuis l'extérieur de la structure de caisse.

9. Structure de caisse selon la revendication 8, **caractérisée en ce que** la peau de pare-choc (8) et la surface affleurante (18) du support de pare-choc (6) comprennent une zone de bénitier (20), la peau de pare-choc (8) présentant un creux (30) et la surface affleurante (18) présentant une largeur réduite dans ladite zone de bénitier (20).

## Claims

1. Motor vehicle bumper holder (6), designed to be attached to the body (1) of said motor vehicle and to be partially covered by a bumper liner (8), said body being provided with two headlight holders (2) each arranged at one transverse end portion of said body (1), said bumper holder (6) comprising a body (12) designed to extend in a transverse direction between the headlight holders (2) and having a bumper liner (8) support surface (16), said bumper holder (6) comprising two tabs (24) designed to engage with the receiving means provided in the headlight holders (2), so as to hold and centre the bumper holders (6) in relation to the motor vehicle body (1), each of the two tabs (24) being rigidly connected to one transverse end of the body (12) **characterised in that** the tabs (24) project transversely from the end portions of the body (12).

2. Bumper holder according to claim 1, **characterised in that** each tab (24) is a spring blade arranged to exert pressure on the body (12) towards the other tab (24) when the tabs (24) engage with the headlight holder (2) receiving means.

3. Bumper holder according to either of claims 1 or 2, **characterised in that** each tab (24) is connected to the body (12) by a material bridge (28) suitable for resilient deformation, and **in that**, each tab (24) has one hook-shaped end (26), for engaging with the headlight holder (2).

4. Bumper holder according to any of the above claims, **characterised in that** the tabs (24) and the holder (6) form a single moulded part.

5. Bumper holder according to any of the above claims, **characterised in that** the body (12) comprises absorption elements (14) for damping a frontal impact.

6. Motor vehicle body structure, comprising a rear portion comprising two headlight holders (2) each attached to one transverse end portion of said rear portion of the body structure (1), a bumper holder (4) arranged between the headlight holders (2), and a bumper liner (8) attached to the body (1) and partially covering the bumper holder (6) and the headlight holders (2), **characterised in that** the bumper holder (6) is in accordance with any of claims 1 to 5.

7. Body structure according to claim 6, **characterised in that** the headlight holders (2) each comprise a contact surface, against which one of the tabs (24) presses, so as to centre the bumper holder (6) in a transverse direction in relation to the body structure (1).

8. Body structure according to claim 6 or 7, **characterised in that** the bumper holder (6) comprises a flush surface (18), parallel with the support surface (16) and offset upwards in relation thereto, said flush surface (18) projecting from the bumper liner (8) so as to be visible from the exterior of the body structure.

9. Body structure according to claim 8, **characterised in that** the bumper liner (8) and the flush surface (18) of the bumper holder (6) comprise a basin zone (20), the bumper liner (8) having a hollow (30) and the flush surface (18) having a reduced width in said basin zone (20).

## Patentansprüche

1. Stoßstangenträger (6) eines Kraftfahrzeuges, der dazu bestimmt ist, an der Karosserie (1) des Kraftfahrzeuges befestigt zu werden und teilweise von einer Stoßstangenhaut (8) überdeckt zu werden, wobei die Karosserie mit zwei Leuchtenträgern (2) ausgestattet ist, die jeweils an einem quergerichteten Endteil der Karosserie (1) angeordnet sind, wobei der Stoßstangenträger (6) einen Körper (12) umfasst, der dazu bestimmt ist, sich gemäß einer Querrichtung zwischen den Leuchtenträgern (2) zu erstrecken, und eine Trägerfläche (16) für die Stoßstangenhaut (8) aufweist, wobei der Stoßstangenträger (6) zwei Laschen (24) umfasst, die dazu bestimmt sind, mit den in den Leuchtenträgern (2) vorgesehenen Aufnahmemitteln zusammenzuwirken, um den Stoßstangenträger (6) in Bezug auf die Karosserie (1) des Kraftfahrzeuges in Position zu halten und zu zentrieren, wobei jede der zwei Laschen (24) fest mit einem quergerichteten Ende des Körpers (12) verbunden ist, **dadurch gekennzeichnet, dass** die Laschen (24) von den Endteilen des Körpers (12) in Querrichtung vorspringen.

2. Stoßstangenträger nach Anspruch 1, **dadurch gekennzeichnet, dass** jede Lasche (24) eine Blattfeder ist, die angeordnet ist, um einen Druck auf den Körper (12) auszuüben, der zur anderen Lasche (24) hin gerichtet ist, wenn die Laschen (24) mit den Aufnahmemitteln der Leuchtenträger (2) zusammenwirken.

3. Stoßstangenträger nach einem der Ansprüche 1 oder 2, **dadurch gekennzeichnet, dass** jede Lasche (24) durch eine Materialbrücke (28), die elastische Verformbarkeitseigenschaften aufweist, mit dem Körper (12) verbunden ist, und **dadurch**, dass jede Lasche (24) ein Ende (26) in Form eines Hakens aufweist, das dazu bestimmt ist, mit dem Leuchtenträger (2) zusammenzuwirken.

4. Stoßstangenträger nach einem der vorhergehenden Ansprüche, **dadurch gekennzeichnet, dass** die Laschen (24) und der Träger (6) ein einstückig geformtes Teil bilden.

5. Stoßstangenträger nach einem der vorhergehenden Ansprüche, **dadurch gekennzeichnet, dass** der Körper (12) Absorptionselemente (14) umfasst, die einen Frontalzusammenstoß dämpfen sollen.

6. Karosseriestruktur eines Kraftfahrzeuges, umfassend einen hinteren Teil, der zwei Leuchtenträger (2) umfasst, die jeweils an einem quergerichteten Endteil des hinteren Teils der Karosseriestruktur (1) befestigt sind, einen Stoßstangenträger (4), der zwischen den Leuchtenträgern (2) angeordnet ist, eine Stoßstangenhaut (8), die an der Karosserie (1) befestigt ist und teilweise den Stoßstangenträger (6) und die Leuchtenträger (2) überdeckt, **dadurch gekennzeichnet, dass** der Stoßstangenträger (6) einem der vorhergehenden Ansprüche 1 bis 5 entspricht.

7. Karosseriestruktur nach Anspruch 6, **dadurch gekennzeichnet, dass** die Leuchtenträger (2) jeweils eine Auflagefläche umfassen, auf die sich eine der Laschen (24) abstützt, um den Stoßstangenträger (6) in Bezug auf die Karosseriestruktur (1) gemäß einer Querrichtung zu zentrieren.

8. Karosseriestruktur nach einem der Ansprüche 6 oder 7, **dadurch gekennzeichnet, dass** der Stoßstangenträger (6) eine bündige Oberfläche (18) umfasst, die parallel zur Trägerfläche (16) und in Bezug auf diese nach oben versetzt verläuft, wobei die bündige Oberfläche (18) so von der Stoßstangenhaut (8) vorspringt, dass sie von außerhalb der Karosseriestruktur sichtbar ist.

9. Karosseriestruktur nach Anspruch 8, **dadurch gekennzeichnet, dass** die Stoßstangenhaut (8) und die bündige Oberfläche (18) des Stoßstangenträgers (6) einen beckenförmigen Bereich (20) umfassen, wobei die Stoßstangenhaut (8) eine Vertiefung (30) aufweist und die bündige Oberfläche (18) im (20) eine verringerte Breite aufweist.
